# EUROPEAN PATENT APPLICATION

(11) **EP 2 610 669 A1**
(43) Date of publication of application: **03.07.2013**
(21) Application number: 12778029.4
(22) Date of filing: 22.08.2012
(51) Int. Cl.: G02F 1/1343, G02F 1/1337

(54) **VERTICALLY ALIGNED LIQUID CRYSTAL DISPLAY AND MANUFACTURING METHOD THEREOF**

(30) Priority: 26.08.2011 CN 201110249557
(71) Applicant: Boe Technology Group Co. Ltd., Beijing 100015 (CN)
(72) Inventor: LU, Jiaoming, Beijing 100176 (CN); YOU, Jaegeon, Beijing 100176 (CN)
(74) Representative: Klunker . Schmitt-Nilson . Hirsch
(86) International application number: PCT/CN2012/080468
(87) International publication number: WO 2013/029488

(57) **Abstract**

According to embodiments of the present invention, there are provided a homeotropic alignment liquid crystal display and a manufacturing method thereof. The homeotropic alignment liquid crystal display comprises: a color filter substrate and a TFT array substrate bonded together; liquid crystals provided between the color filter substrate and the TFT array substrate, wherein the TFT array substrate comprises a common electrode layer and a pixel electrode layer, and wherein in the case where a driving voltage is not applied to the pixel electrode layer, the liquid crystals are aligned perpendicularly to the color filter substrate and the TFT array substrate.

## Description

### FIELD OF INVENTION

Embodiments of the present invention relate to a homeotropic alignment liquid crystal display and a manufacturing method thereof.

### BACKGROUND

A thin film field effect transistor liquid crystal display (TFT-LCD) is now being widely used in various fields of monitor, television, notebook computer and so on, and will still be a mainstream technology for displays in the coming 20-30 years.

Currently, one developing trend of the TFT-LCD technology is to pursue a high contrast and a high transmissivity for achievement of a better display effect. One important factor affecting contrast of the TFT-LCD is alignment of liquid crystals. Display modes of the TFT-LCD can be classified into two categories according to alignment effects of the liquid crystals: one is a vertical alignment (VA) (homeotropic alignment) mode in which the liquid crystals are aligned vertically, which has realized a stable contrast of a level of 3000:1 or more for its commercialized product, and is disadvantageous in that negative liquid crystals having a higher cost and a lower response speed are used. Another is a homogeneous alignment mode in which the liquid crystals are aligned horizontally, comprising an In Plane Switching (IPS) mode, a Fringe Field Switching (FFS) mode, etc., and contrast of its product only reaches a lever of 1500:1 at present. Main causes why the contrast of a display of the homogeneous alignment mode is lower lie in characteristics of the horizontally aligned liquid crystals, and a poor rub and grains during a technical process of rub-alignment, and other factors. Just due to these factors, a light leakage in dark states for this kind of product is greatly increased, whereby improvement of the contrast is influenced.

Therefore, in terms of prior art, it is still hard to solve a problem that a liquid crystal display such as having a FFS electrode structure has a low contrast caused by the light leakage in dark states.

### SUMMARY

According to an embodiment of the invention, there is provided a homeotropic alignment liquid crystal display, comprising: a color filter substrate and a TFT array substrate bonded together; liquid crystals provided between the color filter substrate and the TFT array substrate, wherein the TFT array substrate comprises a common electrode layer and a pixel electrode layer, and wherein in the case where a driving voltage is not applied to the pixel electrode layer, the liquid crystals are aligned perpendicularly to the color filter substrate and the TFT array substrate.

According to another embodiment of the invention, there is provided a manufacturing method of a homeotropic alignment liquid crystal display, comprising: forming a common electrode layer and a pixel electrode layer on a TFT array substrate by a patterning process; forming alignment films on a side of the TFT array substrate where the common electrode and the pixel electrode layer are provided and on a color filter substrate, respectively; bonding the TFT array substrate and the color filter substrate and providing liquid crystals therebetween in a state that surfaces of the TFT array substrate and the color filter substrate which are formed with the alignment films face each other, the liquid crystals being aligned perpendicularly to the color filter substrate and the TFT array substrate in case where a driving voltage is not applied to the pixel electrode.

### BRIEF DESCRIPTION OF THE DRAWINGS

In order to clearly illustrate the technical solution of the embodiments of the invention, the drawings of the embodiments will be briefly described in the following; it is obvious that the described drawings below are only related to some embodiments of the invention and thus are not limitative of the invention.

FIG. 1 is a structurally schematic view showing a homeotropic alignment liquid crystal display provided by an embodiment of the invention;

FIG. 2 is a comparative graph showing transmissivities of the homeotropic alignment liquid crystal display provided by the embodiment of the invention and a conventional liquid crystal display having a FFS electrode structure;

FIG. 3 is a structurally schematic view showing a homeotropic alignment liquid crystal display provided by another embodiment of the invention; and

FIG. 4 is a structurally schematic view showing a homeotropic alignment liquid crystal display provided by still another embodiment of the invention.

### DETAILED DESCRIPTION

In order to make objects, technical details and advantages of the embodiments of the invention apparent, the technical solutions of the embodiment of the invention will be described in a clearly and fully understandable way in connection with the accompanying drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

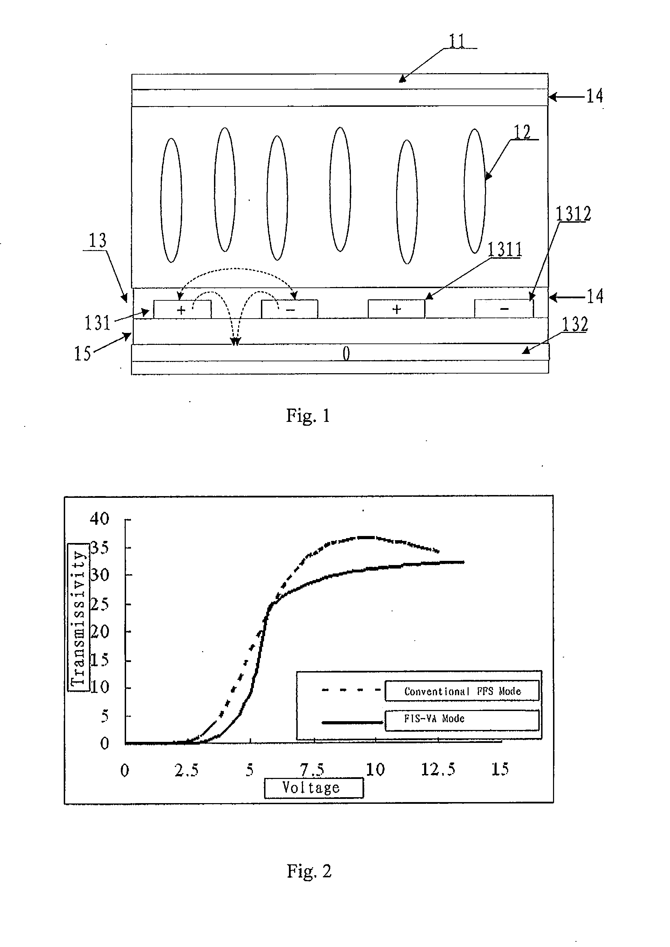

According to an embodiment of the invention, there is provided a homeotropic alignment liquid crystal display, as shown in FIG. 1, comprising:

A color filter substrate 11 and a TFT array substrate 13 bonded together, wherein liquid crystals 12 are provided between the color filter substrate 11 and the TFT array substrate 13. The TFT array substrate 13 comprises a common electrode layer 132 and a pixel electrode layer 131, and the liquid crystals 12 disposed between the color filter substrate 11 and the TFT array substrate 13 are aligned perpendicularly to the color filter substrate 11 and the TFT array substrate 13 in a turn-off state (i.e., a case where a driving voltage is not applied to a pixel electrode 131).

Further, alignment films 14 are disposed on surfaces of the color filter substrate 11 and the TFT array substrate facing each other.

As liquid crystals of the homeotropic alignment liquid crystal display provided by the embodiment of the invention is aligned vertically, there is no need to carry out a rub-alignment process on the alignment film, and badness during the rub-alignment process is avoided, thereby preventing a light leakage in dark states due to poor rubbing. Because the light leakage in dark states is reduced by great extent, contrast of such a liquid crystal display having a FFS electrode structure is increased.

Furthermore, the alignment films 14 may be non-rubbing alignment films. The so-called non-rubbing alignment films mean that an aligning function of the alignment films is obtained by processes other than the rub-alignment process. In this manner, the factors such as poor rubbing, grains, etc. brought by rubbing for alignment can be avoided, and the light leakage in dark states is further reduced, thereby increasing contrast of such a liquid crystal display having the FFS electrode structure. Any suitable processes in prior art can be used for the non-rubbing alignment process, and details are omitted here.

Also, the liquid crystals 12 can be positive liquid crystals. The positive liquid crystals have a faster response speed and a cheaper cost as compared to negative liquid crystals, and thus, use of the positive liquid crystals not only enhances the product quality but also reduces the production cost.

Further, as shown in FIG. 1, the pixel electrode layer 131 on the TFT array substrate 13 may comprise a first pixel electrode 1311 for applying a positive voltage and a second pixel electrode 1312 for applying a negative voltage which are in a strip shape and disposed at intervals. The common electrode layer 132 can be located under the pixel electrode layer 131. As such, as shown in FIG. 1, not only electric fields can be generated between the pixel electrode layer 131 and the common electrode layer 132, but also electric fields are generated between the first pixel electrode 1311 for applying the positive voltage and the second pixel electrode 1312 for applying the negative voltage. Thus, as compared to a conventional FFS electrode structure, a higher electric-field intensity can be generated by the homeotropic alignment liquid crystal display provided by the embodiment, thereby reducing power consumption and heat generation of the product and decreasing production cost.

Also, a passivation layer 15 can be disposed between the pixel electrode 131 and the common electrode 132.

In another embodiment of the invention, the liquid crystal display structure shown in FIG. 1 is used to simulate the specific implementing effect of the above strategy with use of 2dmos. Liquid crystal parameters used in the simulation experiment are: Δε= 7, Δn = 0.107, thickness of a liquid crystal cell d=3.35µm, K₁₁= 9.3pN, K₂₂ = 5.9pN, K₃₃ =11.8 pN, width of the pixel electrodes =3.5µm, interval of the pixel electrodes =8µm, thickness of the passivation layer 15 = 0.35µm, and a pretilt angle =90°. The 2dmos simulation is a known simulation software for liquid crystal optics, and can be used to simulate transmissivity, driving voltage and other photoelectric characteristics of liquid crystal displays.

Liquid crystal parameters used in a simulation experiment for a conventional liquid crystal display having a FFS electrode structure as a contrasting example are: Δε= 3, Δn =0.122, thickness of a liquid crystal cell d=3.35µm, K₁₁= 9.3pN, K₂₂ = 5.9pN, K₃₃ =11.8 pN, width of pixel electrodes =2.8µm, interval of the pixel electrodes =5.2µm, thickness of a passivation layer = 0.35µm, an azimuth angle =-79°, and a pretilt angle =2°.

FIG. 2 is a comparative graph showing transmissivities of the homeotropic alignment liquid crystal display provided by the above embodiment of the invention and the conventional liquid crystal display having the FFS electrode structure. As shown in FIG. 2, a maximum transmissivity of the conventional liquid crystal display having the FFS electrode structure is about 37%, a required driving voltage is 9.5V; while a maximum transmissivity of the homeotropic alignment liquid crystal display provided by the embodiment of invention is about 32%, a required driving voltage is 12.75V. Therefore, transmissivity of the homeotropic alignment liquid crystal display provided by the embodiment of the invention may reach 86% of that of the conventional liquid crystal display having the FFS electrode structure, and contrast of the homeotropic alignment liquid crystal display provided by the embodiment of the invention may be increased from 1500 to 2000 or more, which is 133% of the conventional FFS mode. Thus, as compared to the conventional liquid crystal display having the FFS electrode structure, contrast of the homeotropic alignment liquid crystal display provided by the embodiment of the invention is remarkably improved. It should be noted that, a display technique based on a FFS electrode structure, in which liquid crystals are aligned vertically and positive liquid crystals are used, is proposed by the embodiment of the invention, and the technique combines characteristics of FFS, IPS and VA modes and thus is named as a FIS-VA mode.

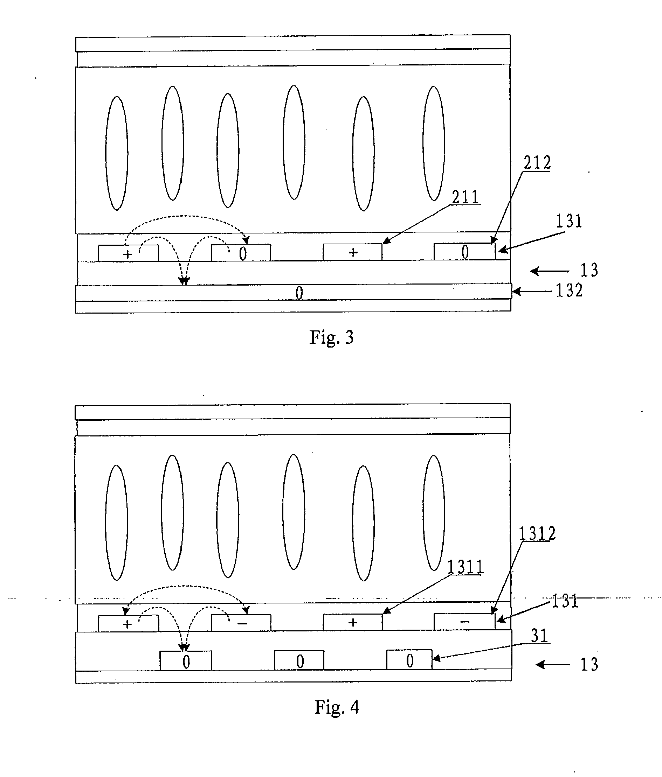

Still another embodiment of the invention provides a homeotropic alignment liquid crystal display as shown in FIG. 3.

The homeotropic alignment liquid crystal display provided by the present embodiment of the invention has a substantially similar structure as the structure according to the embodiment shown in FIG. 1, except that a pixel electrode layer 131 on a TFT array substrate 13 comprises a first pixel electrode 211 for applying a positive voltage and a second pixel electrode 212 having the same voltage as a common electrode layer 132, and the first pixel electrode 211 and the second pixel electrode 212 are in a strip shape and disposed at intervals; and the common electrode layer 132 is located under the pixel electrode layer 131. Additionally, a passivation layer 15 can be disposed between the pixel electrode 131 and the common electrode 132.

By doing this, a setting number of voltages on the TFT array substrate can be decreased from 3 to 2, to thereby simplify design and fabrication of the liquid crystal panel and enhance production efficiency of the product and the product quality.

Yet still another embodiment of the invention provides a homeotropic alignment liquid crystal display as shown in FIG. 4.

The homeotropic alignment liquid crystal display provided by the present embodiment of the invention has a substantially similar structure as the structure according to the embodiment shown in FIG. 1, except that a pixel electrode layer 131 on a TFT array substrate 13 comprises a first pixel electrode 1311 for applying a positive voltage and a second pixel electrode 1312 for applying a negative voltage which are in a strip shape and disposed at intervals; and a common electrode layer 31 is in a strip shape and located under the interval between the first pixel electrode 1311 for applying the positive voltage and the second pixel electrode 1312 for applying the negative voltage.

Designing the common electrode to take the shape of strip makes it possible to save the space, facilitate control of storage capacitance and increase the transmissivity, thereby making it possible that contrast of the product is further enhanced.

Additionally, in the embodiment, it may be the case where the first pixel electrode 1311 is used to apply a positive voltage, and the second pixel electrode 1322 is used to apply the same voltage as the common electrode layer 31.

A method for manufacturing a homeotropic alignment liquid crystal display provided by an embodiment of the invention comprises the following steps:

S501, a common electrode layer and a pixel electrode layer are formed on a TFT array substrate by a patterning process.

Specifically, the pixel electrode layer on the substrate may be a first pixel electrode for applying a positive voltage and a second pixel electrode for applying a negative voltage which are in a strip shape and disposed at intervals; and the common electrode layer is located under the pixel electrode layer. As such, not only electric fields are generated between the pixel electrode layer and the common electrode layer, but also electric fields are also generated between the first pixel electrode for applying the positive voltage and the second pixel electrode for applying the negative voltage. Thus, as compared to a conventional liquid crystal display having a FFS electrode structure, a higher electric-field intensity can be generated by the liquid crystal display provided by the embodiment, thereby reducing power consumption and heat generation of the product and decreasing production cost.

Alternatively, the pixel electrode layer on the substrate may be a first pixel electrode for applying a positive voltage and a second pixel electrode having the same voltage as the common electrode layer, and the first pixel electrode and the second pixel electrode are in a strip shape and disposed at intervals; and the common electrode layer is located under the pixel electrode layer. As such, a setting number of voltages on the TFT array substrate can be decreased from 3 to 2, to thereby simplify design and fabrication of the liquid crystal panel and enhance production efficiency of the product and the product quality.

Alternatively, the pixel electrode layer on the substrate may be a first pixel electrode for applying a positive voltage and a second pixel electrode for applying a negative voltage which are in a strip shape and disposed at intervals; and a common electrode layer is in a strip shape and located under the interval between the first pixel electrode and the second pixel electrode. As such, designing the common electrode to take the shape of strip makes it possible to save the space, facilitate control of storage capacitance and increase the transmissivity, thereby further enhancing contrast of the product. In the embodiment, it may also be the case where the first pixel electrode 1311 is used to apply a positive voltage, and the second pixel electrode 1322 is used to apply the same voltage as the common electrode layer 31.

S502, alignment films are formed on a side of the TFT array substrate where the common electrode and pixel electrode layers are provided and on a color filter substrate, respectively.

Specifically, the alignment films may be non-rubbing alignment films. The so-called non-rubbing alignment films mean that an aligning function of the alignment films is obtained by processes other than the rub-alignment process. In this manner, the factors such as poor rubbing, grains, etc. brought by the rub-alignment process can be avoided, and a light leakage in dark states is further reduced, thereby increasing contrast of the liquid crystal display. Also, liquid crystals in the embodiment can be positive liquid crystals. The positive liquid crystals have a faster response speed and a cheaper cost as compared to negative liquid crystals.

S503, in a state that surfaces of the TFT array substrate and the color filter substrate which are formed with the alignment films face each other, the TFT array substrate and the color filter substrate are bonded and liquid crystals are provided therebetween. The liquid crystals are aligned perpendicularly to the color filter substrate and the TFT array substrate in a turn-off state (i.e., a case where a driving voltage is not applied to the pixel electrode).

Specifically, specific steps of bonding the TFT array substrate and the color filter substrate and providing liquid crystals therebetween may be: the liquid crystals are dripped on the alignment films firstly and then the TFT array substrate and the color filter substrate are bonded; or may also be: the TFT array substrate and the color filter substrate are bonded firstly and then the liquid crystals are injected under vacuum. No matter which method steps of bonding substrates and providing liquid crystals are to be used, an alignment of the liquid crystals which is perpendicular to the color filter substrate and the TFT array substrate in the turn-off state can be achieved, and thus both of them come within the scope aimed for protection by the invention.

Because the liquid crystals are aligned vertically, a light leakage in dark states is reduced to a great extent. Accordingly, contrast of a liquid crystal display having a FFS electrode structure is increased.

The method for manufacturing the homeotropic alignment liquid crystal display provided by the embodiment of invention comprises: the common electrode layer and the pixel electrode layer are obtained on the substrate by the patterning process; the alignment films are provided on the substrate and the prepared color filter substrate; and the liquid crystals aligned perpendicularly to the substrate are dripped on the alignment films, and the substrate having the liquid crystals dripped thereon and the prepared color filter substrate are bonded; alternatively, the substrate and the prepared color filter substrate are bonded, and the liquid crystals aligned perpendicularly to the substrate is injected under vacuum. Because the liquid crystals are aligned vertically, and an alignment manner without rubbing is adopted in order that the factors such as poor rubbing, grains, etc. brought by the rub-alignment technology are avoided, a light leakage in dark states is further reduced. Thus, contrast of the liquid crystal display having the FFS electrode structure is increased.

The foregoing is merely the specific embodiments of the present invention, but the protection scope of the invention is not limited thereto. Variations or replacements, as would be easily conceived by those skilled in the technical field without departing from the technical scope disclosed by the present invention, come within the protection scope of the invention. Thus, the protection scope of the invention is defined by the protection scope of the claims.

## Claims

1. A homeotropic alignment liquid crystal display, comprising:
a color filter substrate and a TFT array substrate bonded together;
liquid crystals provided between the color filter substrate and the TFT array substrate,
wherein the TFT array substrate comprises a common electrode layer and a pixel electrode layer, and
wherein in the case where a driving voltage is not applied to the pixel electrode layer, the liquid crystals are aligned perpendicularly to the color filter substrate and the TFT array substrate.

2. The liquid crystal display claimed as claim 1, wherein an alignment film is provided on at least one of surfaces of the color filter substrate and the TFT array substrate which face each other, and the alignment film is a non-rubbing alignment film.

3. The liquid crystal display claimed as claim 1 or 2, wherein the liquid crystals are positive liquid crystals.

4. The liquid crystal display claimed as any of claims 1-3, wherein the pixel electrode layer on the TFT array substrate comprises a first pixel electrode and a second pixel electrode which are in a strip shape and disposed at intervals, and the common electrode layer is located under the pixel electrode layer.

5. The liquid crystal display claimed as any of claims 1-3, wherein the pixel electrode layer on the TFT array substrate comprises a first pixel electrode and a second pixel electrode which are in a strip shape and disposed at intervals, and the common electrode layer is in a strip shape and located under an interval between the first pixel electrode and the second pixel electrode.

6. The liquid crystal display claimed as claim 4 or 5, wherein the first pixel electrode is used to apply a positive voltage, and the second pixel electrode is used to apply a negative voltage.

7. The liquid crystal display claimed as claim 4 or 5, wherein the first pixel electrode is used to apply a positive voltage, and the second pixel electrode is used to apply the same voltage as the common electrode.

8. The liquid crystal display claimed as any of claims 1-7, further comprising a passivation layer provided between the pixel electrode and the common electrode.

9. A manufacturing method of a homeotropic alignment liquid crystal display, comprising:
forming a common electrode layer and a pixel electrode layer on a TFT array substrate by a patterning process;
forming alignment films on a side of the TFT array substrate where the common electrode and the pixel electrode layer are provided and on a color filter substrate, respectively;
bonding the TFT array substrate and the color filter substrate and providing liquid crystals therebetween in a state that surfaces of the TFT array substrate and the color filter substrate which are formed with the alignment films face each other, the liquid crystals being aligned perpendicularly to the color filter substrate and the TFT array substrate in case where a driving voltage is not applied to the pixel electrode.

10. The manufacturing method claimed as claim 9, wherein the alignment films are non-rubbing alignment films.

11. The manufacturing method claimed as claim 9 or 10, wherein the liquid crystals are positive liquid crystals.

12. The manufacturing method claimed as any of claims 9-11, wherein the pixel electrode layer on the TFT array substrate comprises a first pixel electrode and a second pixel electrode which are in a strip shape and disposed at intervals, and the common electrode layer is located under the pixel electrode layer.

13. The manufacturing method claimed as any of claims 9-11, wherein the pixel electrode layer on the TFT array substrate comprises a first pixel electrode and a second pixel electrode which are in a strip shape and disposed at intervals; and the common electrode layer is in a strip shape and located under an interval between the first pixel electrode and the second pixel electrode.

14. The manufacturing method claimed as claim 12 or 13, wherein the first pixel electrode is used to apply a positive voltage, and the second pixel electrode is used to apply a negative voltage.

15. The manufacturing method claimed as claim 12 or 13, wherein the first pixel electrode is used to apply a positive voltage, and the second pixel electrode is used to apply the same voltage as the common electrode.
